# EUROPEAN PATENT APPLICATION

(11) **EP 4 538 233 A1**
(43) Date of publication of application: **16.04.2025**
(21) Application number: 23819496.3
(22) Date of filing: 17.04.2023
(51) Int. Cl.: C01G 23/00, H01B 1/06, H01B 13/00, H01M 10/0562

(54) **SOLID ELECTROLYTE MATERIAL AND METHOD FOR PRODUCING SAME**

(30) Priority: 07.06.2022 JP 2022092128
(71) Applicant: Panasonic Intellectual Property Management Co., Ltd., Osaka-shi, Osaka 540-6207 (JP)
(72) Inventor: KOGA, Eiichi, Kadoma-shi, Osaka 571-0057 (JP)
(74) Representative: Grünecker Patent- und Rechtsanwälte PartG mbB
(86) International application number: PCT/JP2023/015263
(87) International publication number: WO 2023/238509

(57) **Abstract**

The solid electrolyte material of the present disclosure is a solid electrolyte material containing Li, Ti, and F, comprising an amorphous substance containing Li, Ti, and F. The solid electrolyte material of the present disclosure may further comprise a crystalline phase containing Li, Ti, and F. The solid electrolyte material production method of the present disclosure comprises: (A) synthesizing a compound comprising a crystalline phase containing Li, Ti, and F; and (B) performing a treatment to disturb the crystal of the compound. The compound may be mechanochemically treated in the step (B).

## Description

### Technical Field

The present disclosure relates to a solid electrolyte material and a method for producing the same.

### Background Art

Patent Literature 1 discloses an electrode active material represented by Li₂TiF₆.

### Citation List

### Patent Literature

PTL 1: Japanese Unexamined Patent Application Publication No. 2009-238687

### Summary of Invention

### Technical Problem

It is an object of the present disclosure to provide a novel and highly useful solid electrolyte material.

### Solution to Problem

The solid electrolyte material of the present disclosure is a solid electrolyte material containing Li, Ti, and F, comprising an amorphous substance containing Li, Ti, and F.

### Advantageous Effects of Invention

The present disclosure provides a novel and highly useful solid electrolyte material.

### Brief Description of Drawings

[FIG. 1] FIG. 1 is a flowchart illustrating an example of a production method according to a second embodiment.
[FIG. 2] FIG. 2 is a graph showing X-ray diffraction patterns of samples 4 to 7. Description of Embodiments

### (Summary of Some Aspects of the Present Disclosure)

A solid electrolyte material according to a first aspect of the present disclosure is a solid electrolyte material containing Li, Ti, and F, comprising an amorphous substance containing Li, Ti, and F.

The solid electrolyte material according to the first aspect has a practical ionic conductivity thanks to the inclusion of an amorphous substance containing Li, Ti, and F. Further, the solid electrolyte material according to the first aspect is excellent in particle deformability and in bonding interface formation, which is advantageous to a compacted powder structure. Therefore, according to the first aspect, it is possible to realize a novel and highly useful solid electrolyte material.

In a second aspect of the present disclosure, the solid electrolyte material according to the first aspect may be, for example, a solid solution.

According to the second aspect, it is possible to realize a novel and highly useful solid electrolyte material.

In a third aspect of the present disclosure, for example, in an X-ray diffraction pattern obtained by powder X-ray diffraction measurement of the solid electrolyte material according to the first or second aspect, at least one peak may be present in each of a first range in which the diffraction angle 2θ is greater than or equal to 20° and less than or equal to 22°, a second range in which the diffraction angle 2θ is greater than or equal to 40° and less than or equal to 42°, and a third range in which the diffraction angle 2θ is greater than or equal to 26° and less than or equal to 28°, and the half width of the strongest peak in the first range may be greater than or equal to 1°.

According to the third aspect, it is possible to realize a novel and highly useful solid electrolyte material.

In a fourth aspect of the present disclosure, for example, in the solid electrolyte material according to any one of the first to third aspects, the strongest peak in the first range may have a higher intensity than the strongest peak in the second range, and the strongest peak in the second range may have a higher intensity than the strongest peak in the third range.

According to the fourth aspect, the solid electrolyte material has a high ionic conductivity.

In a fifth aspect of the present disclosure, for example, the solid electrolyte material according to any one of the first to fourth aspects may be in particulate form.

According to the fifth aspect, when the solid electrolyte material is used in a battery or the like, the battery can achieve excellent charge/discharge characteristics.

In a sixth aspect of the present disclosure, for example, in the solid electrolyte material according to any one of the first to fifth aspects, the crystallinity of the surface of the solid electrolyte material may be lower than the crystallinity in the center of the solid electrolyte material.

According to the sixth aspect, a high ionic conductivity can be achieved when the solid electrolyte material is made into a compacted powder structure.

In a seventh aspect of the present disclosure, for example, the solid electrolyte material according to any one of the first to sixth aspects may further contain at least one selected from the group consisting of Ni, Mo, Cr, Fe, and ZrO₂.

According to the seventh aspect, it is possible to realize a novel and highly useful solid electrolyte material.

In an eighth aspect of the present disclosure, for example, the solid electrolyte material according to any one of the first to sixth aspects may further comprise a crystalline phase containing Li, Ti, and F.

According to the eighth aspect, the inclusion of an amorphous structure in the crystal can realize a solid electrolyte material having a high ionic conductivity.

In a ninth aspect of the present disclosure, for example, in the solid electrolyte material according to the eighth aspect, the crystalline phase may comprise a tetragonal crystal.

According to the ninth aspect, the solid electrolyte material has a high ionic conductivity.

A method for producing a solid electrolyte material according to a tenth aspect of the present disclosure comprises:
(A) synthesizing a compound comprising a crystalline phase containing Li, Ti, and F; and
(B) performing a treatment to disturb the crystal of the compound.

According to the tenth aspect, it is possible to produce a novel and highly useful solid electrolyte material.

In an eleventh aspect of the present disclosure, for example, in the production method according to the tenth aspect, the compound may be synthesized in the step (A) by heat-treatment of a mixture of raw materials.

According to the eleventh aspect, it is possible to produce a solid electrolyte material having a high ionic conductivity.

In a twelfth aspect of the present disclosure, for example, in the production method according to the eleventh aspect, the mass change rate of the compound before and after the heat-treatment may be less than or equal to 1%.

According to the twelfth aspect, it is possible to synthesize a homogeneous compound and produce a solid electrolyte material having a higher ionic conductivity.

In a thirteenth aspect of the present disclosure, for example, in the production method according to any one of the tenth to twelfth aspects, the compound may be mechanochemically treated in the step (B).

According to the thirteenth aspect, it is possible to produce a solid electrolyte material having a high ionic conductivity.

In a fourteenth aspect of the present disclosure, for example, in the production method according to the thirteenth aspect, the mechanochemical treatment may be ball milling.

According to the fourteenth aspect, it is possible to produce a solid electrolyte material having a higher ionic conductivity.

Embodiments of the present disclosure will now be described. The present disclosure is not limited to the following embodiments.

### (First Embodiment)

The solid electrolyte material according to the first embodiment is a solid electrolyte material containing Li, Ti, and F, comprising an amorphous substance containing Li, Ti, and F.

The solid electrolyte material according to the first embodiment, thanks to the inclusion of an amorphous substance, has a practical ionic conductivity, for example a high ionic conductivity. Further, the solid electrolyte material is excellent especially in particle deformability and in bonding interface formation, which is advantageous to a compacted powder structure.

As used herein, "high ionic conductivity" refers to a relatively high ionic conductivity when compared between solid electrolyte materials composed of the same elements. The solid electrolyte material according to the first embodiment can have, for example, an ionic conductivity of greater than or equal to 0.5 µS/cm at around room temperature.

As used herein, "amorphous substance" includes a substance having an amorphous structure and a substance having a distorted crystal structure, i.e., a disordered crystal structure. The fact that the solid electrolyte material according to the first embodiment comprises an amorphous substance can be confirmed by an X-ray diffraction pattern obtained by X-ray diffraction measurement. The X-ray diffraction pattern can be measured by the θ-2θ method using Cu-Kα rays (wavelengths 1.5405 Å and 1.5444 Å) as an X-ray source. Further, the fact that the solid electrolyte material according to the first embodiment comprises an amorphous substance can also be confirmed by a transmission electron microscopy (TEM).

For example, in an X-ray diffraction pattern obtained by X-ray diffraction measurement of a substance having an amorphous structure, the half width of the maximum peak is greater than or equal to 1°. A region having a distorted crystal structure, i.e., a region of disordered crystallinity, can be confirmed by TEM. **In** the case of an amorphous substance, a lattice image is not observed in TEM. Accordingly, a region having a distorted crystal structure, i.e., a region of disordered crystallinity, can be observed as an image of a region of high regularity and a region where a lattice image is not observed in a crystalline region, i.e., an image of a disordered region. Thus, in the case of a substance having a distorted crystal structure, i.e., a disordered crystal structure, a region where a lattice image is not observed in a crystalline region is observed in TEM. Thus, in this embodiment, "comprises an amorphous substance containing Li, Ti, and F" means, for example, that in an X-ray diffraction pattern obtained by X-ray diffraction measurement, the half width of the maximum peak is greater than or equal to 1° in a diffraction angle 2θ range of greater than or equal to 20° and less than or equal to 22°, or that a region where no lattice image is observed in a crystalline region is observed in TEM of the compound containing Li, Ti, and F.

The solid electrolyte material according to the first embodiment can be used to obtain a battery having excellent charge/discharge characteristics. An example of the battery is an all-solid-state battery. The battery may be a primary battery or a secondary battery.

The solid electrolyte material according to the first embodiment may be a solid solution. The solid electrolyte material having such a feature has a high conductivity. In addition, a high ionic conductivity can be achieved in a compacted powder structure. As used herein, a solid solution refers to, for example, a single-phase solid.

In an X-ray diffraction pattern obtained by powder X-ray diffraction measurement of the solid electrolyte material, at least one peak may be present in each of a first range in which the diffraction angle 2θ is greater than or equal to 20° and less than or equal to 22°, a second range in which the diffraction angle 2θ is greater than or equal to 40° and less than or equal to 42°, and a third range in which the diffraction angle 2θ is greater than or equal to 26° and less than or equal to 28°, and the half width of the strongest peak in the first range may be greater than or equal to 1°. The solid electrolyte material having such a feature has a high ionic conductivity.

In the X-ray diffraction pattern, the strongest peak in the first range may have a higher intensity than the strongest peak in the second range, and the strongest peak in the second range may have a higher intensity than the strongest peak in the third range. The solid electrolyte material having such a feature has a high ionic conductivity.

The solid electrolyte material may further comprise a crystalline phase. The solid electrolyte material may further comprise a crystalline phase containing Li, Ti, and F. The crystalline phase may comprise a tetragonal crystal. The crystalline phase may be a tetragonal crystal. The inclusion of an amorphous structure in the tetragonal crystal can impart a high ionic conductivity. This can realize a solid electrolyte material having a high ionic conductivity. The amorphous substance and the crystalline phase in the solid electrolyte material may be composed of the same elements.

The solid electrolyte material according to the first embodiment may be in particulate form. In this case, low-crystalline soft particles comprising an amorphous substance form a strong bonding interface in a compacted powder structure. Therefore, the solid electrolyte material according to the first embodiment can realize, for example, a battery having excellent charge/discharge characteristics.

When the solid electrolyte material according to the first embodiment is in particulate form, the crystallinity of the surface of each particle may be lower than the crystallinity in the center of the particle. In this case, compared to the center of each particle, the surface of the particle has a higher conductivity and is softer with superior plasticity. Accordingly, in a compacted powder structure, the bonding between particles is improved, and the resistance at the bonding interface is particularly reduced, resulting in the formation of a continuous ion conducting path between particles. Further, separation between particles, which may occur due to heating/cooling cycles, can be prevented. Thus, high bonding reliability can be achieved. As described above, the solid electrolyte material according to the first embodiment can realize a compacted powder structure having a high ionic conductivity with excellent reliability. Therefore, the use of the solid electrolyte material according to the first embodiment can realize a high-performance battery. The difference in crystallinity can be confirmed, for example, by observing the disorder of the lattice arrangement using a high-resolution TEM or scanning transmission electron microscope (STEM) capable of observing a lattice image.

In the solid electrolyte material according to the first embodiment, the compositional ratio of Li, Ti, and F need not be a stoichiometric compositional ratio. The solid electrolyte material according to the first embodiment may comprise a compound represented by the compositional formula Li₁₋ₐTiₐF₍₁₊₃ₐ₎. In the formula, 0 < a < 1 and 0 < b < 1 are satisfied. The solid electrolyte material according to the first embodiment may comprise a compound represented by the compositional formula Li₂TiF₆.

The solid electrolyte material according to the first embodiment may contain an element(s) other than Li, Ti, and F.

The solid electrolyte material according to the first embodiment may further contain at least one selected from the group consisting of Ni, Mo, Cr, Fe, and ZrO₂.

The solid electrolyte material according to the first embodiment may further contain at least one selected from the group consisting of Fe, Cr, and ZrO₂.

The solid electrolyte material according to the first embodiment may consist essentially of Li, Ti, and F. "The solid electrolyte material consists essentially of Li, Ti, and F" means that the ratio (mole fraction) of the total amount of Li, Ti, and F to the total amount of all the elements constituting the solid electrolyte material according to the first embodiment is greater than or equal to 90%. In one example, the ratio (mole fraction) may be greater than or equal to 95%.

The solid electrolyte material according to the first embodiment may consist only of Li, Ti, and F.

The solid electrolyte material according to the first embodiment may contain substantially no LiF and TiF₄.

The phrase "contain substantially no LiF and TiF₄" means that the entry of trace amounts of LiF and TiF₄ is permitted. In this case, the amount of LiF and TiF₄, which have entered the solid electrolyte material, is below the detection limit of X-ray diffraction measurement. The solid electrolyte material according to the first embodiment may contain no LiF and TiF₄. This can further improve the ionic conductivity.

### (Second Embodiment)

As described in the "Background Art" section, Patent Literature 1 discloses an electrode active material represented by Li₂TiF₆. The Li₂TiF₆ is described as being synthesized by dissolving TiO₂ in hydrofluoric acid, and finally heat-treating it. This method is a well-known common crystal system synthesis method. The Li₂TiF₆ of Patent Literature 1 has been identified as a trigonal crystal from its X-ray diffraction pattern. The crystal has a problem with the bonding reliability of a compacted powder structure, and it is difficult to achieve a practical conductivity for use e.g. in batteries. The present inventors reached a solid electrolyte material according to the following second embodiment.

A production method according to the second embodiment will now be described.

The solid electrolyte material production method according to the second embodiment comprises:
(A) synthesizing a compound comprising a crystalline phase containing Li, Ti, and F; and
(B) performing a treatment to disturb the crystal of the compound.

According to the above production method, it is possible to realize a solid electrolyte material having a high ionic conductivity. Further, the solid electrolyte material is excellent especially in particle deformability and in bonding interface formation, which is advantageous to a compacted powder structure.

The above step (A) is hereinafter referred to as "the first step", and the above step (B) as "the second step".

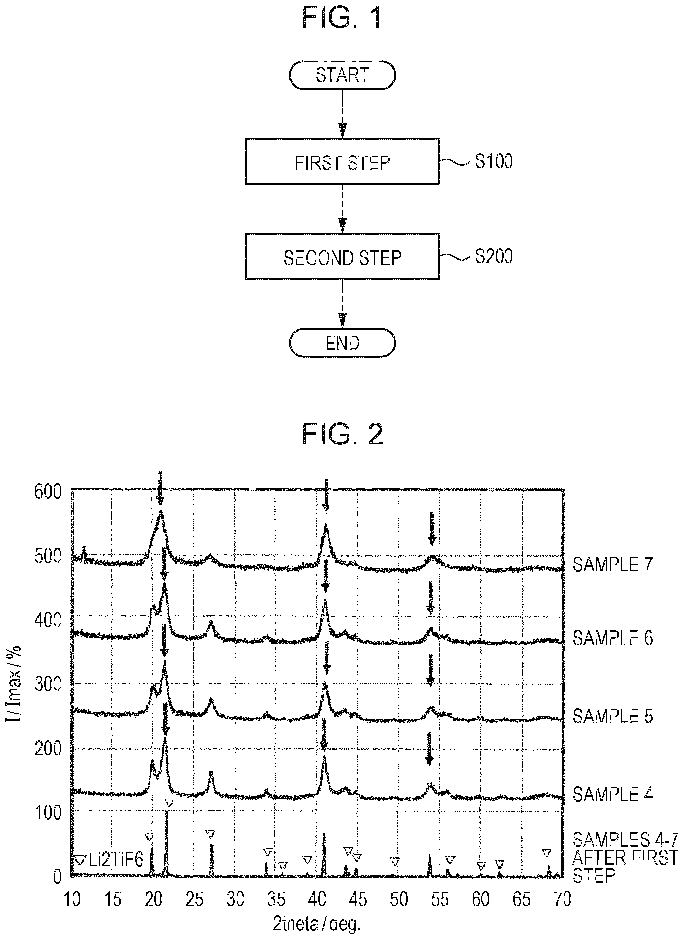

FIG. 1 is a flowchart illustrating an example of the production method according to the second embodiment.

As shown in FIG. 1, the production method according to the first embodiment comprises the first step S100 and the second step S200. The second step S200 is carried out after the first step S100.

In the first step S 100, a compound comprising a crystalline phase containing Li, Ti, and F is synthesized.

In the second step S200, a treatment is performed to disturb the crystal of the compound synthesized in the first step S100.

The "treatment to disturb the crystal of the compound" includes a treatment to distort the crystal of the compound and a treatment to make the crystal of the compound contain an amorphous structure.

According to the above-described production method, it is possible to obtain a solid electrolyte material having a high ionic conductivity. The solid electrolyte material comprises an amorphous substance.

The first step S 100 and the second step S200 will now be described in detail.

### (First Step S100)

In the first step S 100, a compound comprising a crystalline phase containing Li, Ti, and F is synthesized. The compound has, for example, a composition represented by Li₂TiF₆. The compound may be crystalline.

First, raw materials containing the constituent elements of the intended compound are mixed.

The raw materials are, for example, a fluoride containing Li and a fluoride containing Ti, in particular LiF and TiF₄.

When the compound comprising a crystalline phase containing Li, Ti, and F is synthesized, not only a fluoride(s) but an oxide(s) or other halide(s) may also be used as a raw material.

The raw materials may be a precursor of a compound consisting of Li and F, and a precursor of a compound consisting of Ti and F.

The raw materials may each be a powder. The raw materials may have an average particle size of, for example, greater than or equal to 0.5 µm and less than or equal to 10 µm.

Subsequently, the mixture of raw materials may be subjected to a solid-phase reaction to obtain the compound.

The mixture of raw materials may be, for example, heat-treated. Thus, in the first step S 100, the compound may be synthesized by heat-treatment of the mixture of raw materials.

The synthesis of the compound by heat-treatment of raw materials can prevent secondary phase formation in the raw materials, making it possible to produce the intended compound with high purity and homogeneity. Therefore, components that inhibit ion conduction can be reduced. Further, by controlling the heat-treatment conditions (temperature, time, temperature increase/decrease rate, or atmosphere), reaction variations can be reduced, and a homogeneous crystalline compound can be synthesized in high mass productivity.

When the compound comprising a crystalline phase containing Li, Ti, and F is synthesized by heat-treatment, the above-described raw materials are, for example, uniformly mixed and placed in a heat-resistant container (shell) made of alumina, and the mixed raw material is heat-treated. If the raw material is stable in air, it may be heat-treated in the air.

To discharge an unnecessary reaction gas from a heat-treatment furnace, air may be allowed to flow into the furnace during heat-treatment. If the raw material is poorly stable in air, it may be heat-treated in an atmosphere of an inert gas such as argon gas or nitrogen gas. For example, while allowing nitrogen gas to flow into the furnace during heat-treatment, a reaction gas (moisture, an unnecessary gas component, etc.) is discharged, and heat-treatment is performed for 1 to 20 hours in a solid-phase reaction temperature range (e.g., greater than or equal to 600°C and less than or equal to 700°C). By thus introducing air or an inert gas into the heat-treatment furnace and discharging it, an unnecessary reaction gas component, etc. can be prevented from remaining in the synthesized compound in the furnace.

The introduction of the gas into the furnace is preferably performed in such a manner that the inflow gas does not directly hit the shell containing the raw material. For example, a plate larger than a gas inlet is placed between the gas inlet and the shell. The thickness of the plate may be such that it will not be broken by the gas flow or by handling. An alumina plate, for example, may be placed upright to partially block the gas flow. By thus blocking the gas flow between the gas inlet and the shell, the gas is caused to flow around the blocking plate before it hits the shell. By thus causing the gas to indirectly hit the shell, a decrease in the temperature of a portion of the shell, due to direct contact of the gas with that portion, can be avoided. This can alleviate the problem of broad temperature distribution in the shell. It is therefore possible to prevent uneven distribution of the state of progress (i.e., variation in the state of progress) of a synthesis reaction.

The gas inlet is preferably provided on the bottom side of the furnace, while the gas outlet is preferably provided at an upper portion (for example, in the ceiling or at an upper portion of the side wall) of the furnace. This allows the reaction gas to be smoothly discharged out of the furnace along with a convection current flowing from bottom to top in the heat-treatment furnace, thereby reducing the entry of unnecessary components into the compound.

The gas may be heated before it is introduced into the heat-treatment furnace. This can prevent the temperature distribution in the shell from becoming uneven. Therefore, the reaction distribution in the shell can be made uniform, making it possible to obtain a more homogenous compound.

The heat-treatment temperature may be any temperature as long as the intended compound can be produced. Heat-treatment may be performed at a temperature greater than or equal to the melting point of the intended compound. When heat-treatment is performed at a temperature greater than or equal to the melting point of the intended compound, the melt has higher fluidity than the solid, so that the composition diffuses and a homogeneous block body can be obtained.

The heat-treatment temperature may be 600°C to 750°C. The heat-treatment time may be 0.5 hours to 40 hours. The temperature, time, and reaction gas discharge time required for the synthesis of the intended compound may be arbitrarily determined so that no raw material remains. For example, the heat-treatment time may be adjusted according to the amount of powder to be heat-treated.

The rate of temperature increase is preferably low in a temperature range from the reaction start temperature (e.g., about 500°C) to the maximum temperature in order to uniformly progress the solid-phase reaction and crystallization. The rate of temperature increase may be, for example, 50°C/h to 250°C/h. This reduces the nonuniformity of the temperature in the heat-treatment furnace and in the powder. For example, the temperature difference in the powder is 20°C at a maximum. Accordingly, the growth of crystal grains proceeds uniformly, and a compound with uniform crystallinity is synthesized.

The uniformity of the growth of grains can be estimated by the pitch of a growth streak pattern as observed like tree rings in particle observation using a scanning electron microscope (SEM). For example, a streak pattern with a pitch of 0.05 µm to 0.2 µm is observed in a 1 µm-sized particle.

The raw material may be held at a temperature around the reaction initiation point, for example, at 470°C to 530°C for 0.5 to 4 hours before raising the temperature. This enables the reaction to proceed more uniformly throughout the powder. Accordingly, the amount of the remaining raw material and compositional variation can be reduced, making it possible to synthesize a homogeneous compound having good crystallinity.

The reaction initiation point can be confirmed by observing the reaction heat using thermogravimetric differential thermal analysis (TG-DTA) of the mixed powder. When there are multiple solid-phase reactions, the powder may be held at each reaction temperature. In one example, the powder is held at the highest reaction temperature. This method is particularly effective for uniform reaction throughout the powder.

The heat-treatment furnace can be a known atmospheric heat-treatment furnace.

In order to remove air and moisture between powder particles deep inside the shell and completely replace them with an inert gas, vacuum replacement may be performed before allowing the inert gas to flow into the furnace. Vacuum replacement may be performed repeatedly.

When heat-treatment is performed at a temperature greater than or equal to the melting temperature of a compound to be synthesized, the shell used is, for example, a heat-resistant container made of dense alumina with no air permeability. For example, the container may be of the commonly-used grade SSA-H (purity 95%, density 3.9 g/cm³, water absorption 0%) or higher. The use of such a shell can synthesize the compound without allowing a molten component to penetrate the wall of the shell. Further, the shell of such a grade has a thermal conductivity as high as about 20 W/m·k. This can prevent uneven temperature distribution in the shell, which is preferred for a uniform reaction. In addition, the synthesized compound in the state of a molten block body can be easily detached from the shell without any reaction with the shell. Thus, the block body of the compound can be recovered with reduced loss.

The material of the shell need not be alumina. It may be, for example, a refractory material which has a thermal conductivity equal to or higher than that of alumina and which hardly reacts with the compound. The use of a high-thermal conductivity refractory material for the shell makes it possible to synthesize the compound while reducing the unevenness in the temperature distribution in the shell.

Other examples of the material of the shell include highly thermally conductive refractory materials such as alumina of SSA-S, SSA-T or SSA-995 grade, and SiC having a thermal conductivity of about 17 W/m·k.

Heat-treatment may be performed without using a shell. For example, the powder may be sprayed and heat-treated using a spray dryer and a rotary kiln.

In the first step S 100, heat-treatment of the mixture of raw materials may be performed twice. This can reduce variation in the composition or in the crystallinity. Accordingly, the solid-phase reaction can proceed more uniformly. The two heat-treatments may be performed under different conditions. For example, the temperature during the second heat-treatment may be made higher than the temperature during the first heat-treatment to make the composition more uniform or to prevent the raw material from remaining. The temperature during the second heat-treatment may be made lower than the temperature during the first heat-treatment to improve the crystallinity. This can eliminate local distortion (amorphous component). The third and subsequent heat-treatments may be performed.

When the compound is synthesized by heat-treatment of the mixture of raw materials, the mass change rate of the compound before and after heat-treatment may be less than or equal to 1%. The mass change rate of the compound before and after heat-treatment refers to the percentage of the absolute value of the difference between the mass of the mixture of raw materials before heat-treatment and the mass of the compound obtained after heat-treatment, relative to the mass of the mixture of raw materials before heat-treatment.

The compound containing Li, Ti, and F may be synthesized not by heat-treatment but by a mechanochemical method. Thus, the compound may be synthesized through a reaction caused by a mechanochemical treatment. For example, the raw material is placed into a planetary ball mill or a pot mill together with a milling medium, such as zirconia balls, and milled. A reaction proceeds by repeated application of an impact to the raw material from the milling medium under an appropriate stress that can maintain the crystallinity, and a crystalline compound is synthesized. Since the compound is synthesized in a closed space, there is no evaporation of the composition, and the raw material charged into the container can be fully recovered; therefore, a compound of the starting composition is likely to be obtained.

When the mechanochemical treatment is excessively strong, a compound of low crystallinity can be synthesized. This compound may be used as a raw material in the first step and the second step. In other words, the first step and the second step may be carried out using, as a raw material, the low crystalline compound which has been synthesized through the reaction caused by the mechanochemical treatment. Variation in the composition of the low crystalline compound, which has been synthesized through the reaction caused by the mechanochemical treatment, is reduced during heat-treatment. Further, the crystallinity of the compound is improved during heat-treatment.

The milling medium may be a known partially stabilized zirconia. Partially stabilized zirconia has excellent wear resistance. The use of partially stabilized zirconia as the milling medium enables synthesis of the compound while reducing entry of impurities into the compound due to wear of the milling medium.

The milling medium is placed in a milling container in an amount of 10% to 60% of the volume of the container, and the container is sealed with an inert gas (e.g., nitrogen gas or argon gas). The mill is rotated to stir the content.

The mechanochemical treatment may be performed in the air when the raw material has air stability.

The milling medium may have a spherical shape with a diameter of 2 mm to 30 mm. Various medium sizes can be used to adjust the milling characteristics (e.g., synthesis rate).

In order to improve the milling characteristics (e.g., synthesis rate), the inner wall of the ball mill may be made of the same material as that of the hard milling medium, such as zirconia. The shape of the inner wall may be cylindrical or may be a polygonal tube such as a rectangular tube. When the inner wall of the ball mill has the shape of a polygonal tube, the milling characteristics are enhanced and the synthesis rate is increased. This enables the treatment to be completed in a shorter time.

The mechanochemical treatment time is, for example, greater than or equal to 1 hour and less than or equal to 80 hours. It is generally greater than or equal to 10 hours and less than or equal to 20 hours.

The ball mill may be heated from the outside to activate the reaction, thereby increasing the synthesis rate. For example, it may be heated to 40°C to 60°C. This enables the synthesis to be completed in a shorter time, leading to excellent mass productivity.

When a raw material having a high mechanochemical activity is used, the synthesis of the compound can proceed only by a shear stress generated by a mortar and a pestle. In such a case, the mechanochemical treatment may be performed using an automatic mortar (e.g., a grinding machine) or by hand. The mortar may be heated to increase the synthesis rate. The reaction temperature may be controlled to stabilize the state of synthesis. For example, a mixing operation can be experimentally performed with a mortar placed on a hot plate.

The crystal contained in the compound synthesized in the first step S100 may be tetragonal.

For example, when stoichiometric Li₂TiF₆ is synthesized by a common heat-treatment method, a tetragonal crystal is obtained.

The ionic conductivity of the compound can be improved by distorting the crystallinity in the second step S200. It is considered that the introduction of amorphousness reduces the Li ion binding effect of F ions having a high electronegativity, thereby improving the ionic conductivity.

The synthesized compound can be a melt, a sintered body, or a block-like solid mass of powder. The block-like solid mass of powder is easy to handle and has good productivity.

The compositional ratio of the compound containing Li, Ti, and F may not be a stoichiometric ratio, and may not be the stoichiometric ratio: Li:Ti:F = 2:1:6. The compound may also contain an element (sub-component) other than Li, Ti, and F. Examples of the sub-component include Ni, Mo, Cr, Fe, and ZrO₂. The content of the sub-component may be, for example, 0.01% by mass to 3% by mass based on the amount of the compound, or 0.01% by mass to 3% by mass based on the total amount of Li, Ti, and F. Such a sub-component acts as a solid-phase reaction accelerator and enables the reaction to proceed uniformly and in a shorter time or at a lower temperature. Therefore, a solid electrolyte material having a high ionic conductivity can be obtained at a high synthesis efficiency. In addition, the synthesis energy can be reduced.

When a compound containing the above-described sub-component is synthesized, the heat-treatment temperature may be lower than when a compound consisting only of Li, Ti, and F is synthesized. When a compound containing the above-described sub-component is synthesized, the heat-treatment temperature may be 550°C to 750°C.

That the synthesized compound comprises a crystalline phase containing Li, Ti, and F can be confirmed by X-ray diffraction measurement. Further, a crystal system, such as a tetragonal system, can be confirmed by an X-ray diffraction pattern.

After the first step, part of the starting material (e.g., TiF₄ or LiF) may not remain. After the first step, part of the starting material (e.g., TiF₄ or LiF) may remain. The remaining starting material may be less than the compound comprising a crystalline phase containing Li, Ti, and F. Thus, the compound comprising a crystalline phase containing Li, Ti, and F may be synthesized as a main component. The minor amount of the starting material remaining after the first step, if its amount is smaller than the amount of Li₂TiF₆, does not significantly reduce the conductivity.

### (Second Step S200)

In the second step S200, a treatment to disturb the crystal of the compound synthesized in the first step S100 is performed. For example, a mechanical stress or impact is applied to the compound obtained in the first step S100. The treatment can form an amorphous substance.

The treatment to disturb the crystal is, for example, a mechanochemical treatment. Thus, in the second step S200, the compound may be mechanochemically treated. By subjecting the compound comprising the crystal to the mechanochemical treatment, a distorted crystal or amorphousness can be introduced into the compound. The mechanochemical treatment may be carried out by the same method as that described above with reference to the first step S100.

The mechanochemical treatment has the advantage of little entry of impurities and reduced compositional deviation. Further, the mechanochemical treatment has good workability and excellent productivity.

When the compound comprising Li, Ti, and F is synthesized through a reaction caused by the mechanochemical treatment in the first step S100, the production method, the medium, etc. used in the synthesis can be used also in the second step S200.

The mechanochemical treatment may be ball milling. Thus, in the second step S200, the compound may be mechanochemically treated in a ball mill.

The mechanochemical treatment in the second step S200 reduces the crystallinity of the powder or particles (particularly in a surface region) of the synthesized compound. Thus, the mechanochemical treatment in the second step S200 makes the compound amorphous. In particular, the treatment reduces the crystallinity in a surface region of the powdery or particulate compound. The mechanochemical treatment in the second step S200 may be performed for a shorter time and under conditions of lower milling or collision energy than when the compound is synthesized through a reaction caused by the mechanochemical treatment in the first step S100.

In particular, the amount of a milling medium may be smaller and the amount of the powder used may be larger than those in the mechanochemical treatment in the first step S100. Therefore, the mechanochemical treatment in the second step S200 can use a simpler facility than that for a common mechanochemical synthesis treatment, leading to excellent productivity.

For example, mechanochemical milling is performed using a zirconia container, with zirconia balls placed therein in an amount of greater than or equal to 10% and less than or equal to 60% of the volume of the container. Zirconia balls having a diameter of 1 mm to 30 mm are usually used; however, smaller or larger zirconia balls may be used.

Alumina-based milling balls having a low specific gravity, for example, may also be used as the milling medium in order to control the mechanochemical action (for example, to weaken it so that it will not become excessive).

In order to prevent the milling medium from sticking to the inner wall of the container, an additive which does not adversely affect the properties of the solid electrolyte material may be added. The additive may be one that can be removed by drying it. An example of the additive is ethanol.

The container used in the mechanochemical treatment may be small-sized to reduce internal heat generation due to strong impact and rubbing action. The mechanochemical treatment may be performed using a common ball mill, for example a pot mill which is most commonly used in a mass-production ceramic milling process. Containers of various volumes, ranging from tens of milliliters to hundreds of liters, can be used, and a few grams to hundreds of kilograms of the compound can be treated.

According to the production method of the present disclosure, a solid electrolyte material having a high conductivity can be synthesized in a short time while reducing compositional variation of a component which easily evaporates, such as Li. For example, the compositional variation can be reduced to the range of -0.01% by mass to 1% by mass (powder mass ratio before heat-treatment) relative to the mass of the raw material power.

The introduction of an amorphous component by the second step can be confirmed by an X-ray diffraction pattern obtained by powder X-ray diffraction measurement.

The softness of the powder particles can be increased, i.e., the crystallinity can be reduced, by extending the time for the mechanochemical treatment in the second step S200. The softness of the powder particles can be evaluated relative to the change in the crystallinity by performing a micro-Vickers evaluation on each particle or on a compacted powder structure. The softness of the powder particles can also be evaluated by visually observing the change in the state of the powder throughout the production process. This is because as the crystallinity changes, and thus the softness of the powder particles increases with the extension of the mechanochemical treatment time, the amount of powder adhering, for example, to the inner wall of the container of a ball mill and to zirconia balls increases accordingly.

### (Others)

The solid electrolyte material production method according to the second embodiment may include pulverizing the compound after the second step S200. The pulverization of the compound is hereinafter referred to as "the pulverization step".

In the pulverization step, the compound may be stirred and milled using, as a milling medium, zirconia beads having a diameter of less than or equal to 1 mm. In this step, the solid electrolyte material can be made into particles e.g. having a diameter of less than or equal to 1 µm. The particle size is thus reduced and, in addition, an amorphous substance is formed in the surfaces of the particles. The resulting solid electrolyte material can be used, for example, as a thin solid electrolyte layer.

When the compound is synthesized by heat-treatment in the first step S100, the heat-treated product contains particles which have been necked together, i.e., bonded together, by a solid-phase reaction between the particles. The size of the necked, aggregated particles is mainly 1 µm to 10 µm. When the compound is in a crystalline state in which F ions, which are anions having a high electronegativity and a strong Li ion binding effect, are aligned, the ionic conductivity is almost zero, e.g. less than 1 × 10⁻⁹ S/cm. Therefore, when the compound is to be used as a solid electrolyte material, the compound is subjected to the treatment, or the second step, to crush, e.g. by milling, the necked, aggregated particles and disturb the crystallinity.

### EXAMPLES

The present disclosure will now be described in more detail by reference to the following examples.

Solid electrolyte materials of samples 1 to 11 were produced. Samples 1 to 3 correspond to comparative examples, and samples 4 to 11 correspond to inventive examples. The production process of the solid electrolyte materials of samples 1 to 3 did not include the synthesis of a compound comprising a crystalline phase containing Li, Ti, and F. The examples will be described in detail.

### <Sample 1>

A LiF powder and a TiF₄ powder, which were of chemically high purity, were prepared as raw materials. These raw material powders were weighed so that the composition ratio represented by Li₂TiF₆ was obtained, i.e., at the molar ratio LiF:TiF₄ = 2:1, at a temperature of 22°C to 26°C in the air having a humidity of about 30% to 50%.

The thus-prepared raw material powders were mixed uniformly with a pestle for about 10 minutes in an alumina porcelain mortar to obtain a mixed powder.

The mixed powder and zirconia balls (about 1000 g) having a diameter of 15 mm were placed in a 1-L cylindrical ball mill container having an inner wall made of zirconia, and the mixed powder was ball-milled at room temperature for 3 hours at a rotational speed of 60 to 80 rpm. Thereafter, the treated powder was taken from the ball mill container. A solid electrolyte material of sample 1 was obtained in this manner.

### <Samples 2 and 3>

A solid electrolyte material of sample 2 was obtained in the same manner as sample 1, except that the ball milling time was changed to 7 hours.

The solid electrolyte material of sample 3 was obtained in the same manner as sample 1, except that the ball milling time was changed to 12 hours.

<Sample 4>

### (First Step)

First, a LiF powder and a TiF₄ powder, which were of chemically high purity, were prepared as starting materials. These powders were weighed so that the composition ratio represented by Li₂TiF₆ was obtained, i.e., at the molar ratio LiF:TiF₄ = 2:1, at a temperature of 22°C to 26°C in the air having a humidity of about 30% to 50%.

Next, the starting material powders were mixed uniformly with a pestle for about 10 minutes in an alumina porcelain mortar to obtain a mixed powder. The mixed powder (about 5 g) was placed in a high-purity (SSA-H) alumina shell (diameter 40 mm, height 45 mm). To prevent evaporation of components during heat-treatment, a high-purity (SSA-H) alumina lid was placed on the shell to seal it.

Next, the mixed powder was heat-treated in the center of a heat-treatment furnace for good temperature uniformity. Three support posts were placed under the shell to space the shell from the bottom of the furnace. The support posts were made of mullite, and had a porosity of about 20% and a low heat capacity. A heater heat (radiant heat) and an inert gas can reach the bottom of the shell. Each support post was 10 mm in length, 11 mm in width, and 10 mm in height.

After closing the door of the heat-treatment furnace to seal it, nitrogen gas was allowed to flow at 1 L/min to 3 L/min into the furnace from a gas inlet provided at the bottom of the furnace, and was discharged from a gas outlet provided in the ceiling. Nitrogen gas was allowed to keep flowing until the completion of heat-treatment. By thus allowing the gas to flow from the bottom of the furnace to the ceiling, even when an unnecessary evaporated component or dust is generated in the furnace, the unnecessary component or dust can be discharged out of the furnace along with a convection current. This can reduce the entry of impurities into the heat-treated sample. An alumina plate having a thickness of 3 mm was placed at around the midpoint between the gas inlet and the shell to partially block the gas flow so that it will not directly hit the shell. The distance between the gas inlet and the shell was about 10 cm.

The heat-treatment conditions were as follows. The temperature was raised to 500°C at a rate of 100°C/h, and that temperature was maintained for 2 hours. Thereafter, the temperature was raised to 600°C at 200°C/h, and that temperature was maintained for 4 hours. The mixed powder was then cooled to room temperature at about 200°C/h. The temperature was the actual temperature inside the shell.

The mass decrease rate after heat-treatment was about 0.1% by mass to 1.0% by mass; thus, evaporation of components was almost completely inhibited. Therefore, the composition of the heat-treated product can be considered the same as the starting composition.

A block-like heat-treated product composed of aggregated powder was thus obtained.

### (Second Step)

The heat-treated product (about 5 g) in the shell was roughly crushed into about 10 µm in the air using an alumina porcelain mortar and a pestle. Subsequently, the crushed heat-treated product and 15-mm zirconia milling balls (about 1000 g) were placed in a 1-L cylindrical ball mill container having a zirconia inner wall, and the crushed heat-treated product was ball-milled at room temperature for 3 hours at a rotational speed of 60 rpm to 80 rpm. Thereafter, the treated powder was taken from the ball mill container.

A solid electrolyte material of sample 4 was thus obtained.

### <Samples 5 to 7>

A solid electrolyte material of sample 5 was obtained in the same manner as sample 4, except that the ball milling time was changed to 7 hours.

A solid electrolyte material of sample 6 was obtained in the same manner as sample 4, except that the ball milling time was changed to 12 hours.

A solid electrolyte material of sample 7 was obtained in the same manner as sample 4, except that the ball milling time was changed to 20 hours.

### <Samples 8 to 10>

A solid electrolyte material of sample 8 was obtained in the same manner as sample 7, except that 0.2 mass % of iron powder was further added to the mixed powder to be heat-treated in the first step, and that the heat-treatment temperature, which was maintained for 4 hours in the first step, was changed to 550°C.

A solid electrolyte material of sample 9 was obtained in the same manner as sample 7, except that 0.1 mass % of chromium powder was further added to the mixed powder to be heat-treated in the first step, and that the heat-treatment temperature, which was maintained for 4 hours in the first step, was changed to 550°C.

A solid electrolyte material of sample 10 was obtained in the same manner as sample 7, except that 1 mass % of zirconium oxide was further added to the mixed powder to be heat-treated in the first step, and that the heat-treatment temperature, which was maintained for 4 hours in the first step, was changed to 550°C.

### <Sample 11>

A solid electrolyte material of sample 11 was obtained in the same manner as sample 7, except that the heat-treatment temperature, which was maintained for 4 hours in the first step, was changed to 750°C.

### (Evaluation of Samples)

For each of the samples after the first step and the samples after the second step, its crystalline phase and ionic conductivity were evaluated. The results of the evaluation made after the first step are shown in Table 1. The results of the evaluation made after the second step are shown in Table 2.

In making the evaluation of the crystalline phase, each sample was first crushed uniformly in an alumina mortar to such a degree that no coarse particles were felt any more, for example, until the sample became powder having an average particle size of less than or equal to 3 µm. Subsequently, the crystalline phase was evaluated by powder X-ray diffraction measurement (XRD). An X-ray diffractometer (MiniFlex 600, manufactured by Rigaku Corporation) was used for the measurement. Cu-Kα rays (wavelengths 1.5405 Å and 1.5444 Å) were used as an X-ray source.

When multiple crystalline phases were observed, in the "crystalline phase" column in Tables 1 and 2, the crystalline phases are listed in each cell in decreasing order of the strongest peak intensity in an X-ray diffraction pattern. The crystalline phase listed on the leftmost side of each cell is the main component of the material.

The ionic conductivity of each sample was determined in the following manner. The powder of each sample was placed in a mold (diameter 10 mm), and a pressure of about 3 t/cm was applied to the powder using a uniaxial hydraulic press to obtain a compacted powder. The ionic conductivity of the sample was calculated from the area, thickness, and impedance characteristics at room temperature of the compacted powder. The impedance was measured at room temperature while applying the pressure to the powder. The measurement of the impedance was performed, without a DC bias, at a measurement frequency of 10 Hz to 10 MHz and a measurement voltage of 1 Vrms. Deviation of the electrical length of a cable and a measuring jig was offset for evaluation.

**[Table 1]**

| Sample | First step | | |
|---|---|---|---|
| | Starting materials | Heat-treatment temp. (°C) | Crystalline phase |
| 1 | TiF₃, LiF | - | TiF₃, LiF |
| 2 | TiF₃, LiF | - | TiF₃, LiF |
| 3 | TiF₃, LiF | - | TiF₃, LiF |
| 4 | TiF₃, LiF | 600 | Li₂TiF₆ (tetragonal) |
| 5 | TiF₃, LiF | 600 | Li₂TiF₆ (tetragonal) |
| 6 | TiF₃, LiF | 600 | Li₂TiF₆ (tetragonal) |
| 7 | TiF₃, LiF | 600 | Li₂TiF₆ (tetragonal) |
| 8 | TiF₃, LiF + 0.2mass%Fe | 550 | Li₂TiF₆ (tetragonal) |
| 9 | TiF₃, LiF + 0.1mass%Cr | 550 | Li₂TiF₆ (tetragonal) |
| 10 | TiF₃, LiF + 1mass%ZrO₂ | 550 | Li₂TiF₆ (tetragonal) |
| 11 | TiF₃, LiF | 750 | Li₂TiF₆ (tetragonal) |

**[Table 2]**

| Sample | Second step | | | |
|---|---|---|---|---|
| | Ball milling time (hr) | Crystalline phase | Half width of the strongest peak in the first range (°C) | Ionic conductivity (µS/cm) |
| 1 | 3 | TiF₄, LiF | - | 0.1 |
| 2 | 7 | TiF₄, LiF | - | 0.1 |
| 3 | 12 | TiF₄, LiF | - | 0.2 |
| 4 | 3 | Li₂TiF₆ (tetragonal) | 1 | 1.1 |
| 5 | 7 | Li₂TiF₆ (tetragonal) | 1.32 | 1.2 |
| 6 | 12 | Li₂TiF₆ (tetragonal) | 1.85 | 1.4 |
| 7 | 20 | Li₂TiF₆ (tetragonal) | 2.06 | 1.4 |
| 8 | 20 | Li₂TiF₆ (tetragonal) | 2.11 | 1.4 |
| 9 | 20 | Li₂TiF₆ (tetragonal) | 2.07 | 1.4 |
| 10 | 20 | Li₂TiF₆ (tetragonal) | 2.13 | 1.5 |
| 11 | 20 | Li₂TiF₆ (tetragonal) | 2.08 | 1.5 |

### (Discussion)

The solid electrolyte materials of samples 1 to 3, which were produced by ballmilling a mixture of LiF and TiF₄ while omitting the first step, i.e. without synthesizing Li₂TiF₆, had lower ionic conductivities than those of the inventive examples.

Samples 1 to 3 did not contain an amorphous substance containing Li, Ti, and F. Though not shown in Table 1, even when ball milling of sample 3 was continued for additional 100 hours or more, the ionic conductivity was less than 0.5 µS/cm.

Thus, it is difficult to obtain the solid electrolyte material of the present disclosure by only performing the second step of ball milling (for example, on a scale of a few grams to hundreds of kilograms) without performing the first step.

FIG. 2 is a graph showing X-ray diffraction patterns of samples 4 to 7. As shown in the data for samples 4 to 11, by heat-treatment of the starting materials under the appropriate conditions in the first step, the heat-treated products after the first step were each composed of a single phase of crystalline Li₂TiF₆. Thus, LiF and TiF₄ were not observed in the X-ray diffraction pattern. The crystals were tetragonal. Though not shown in Table 1, the ionic conductivities of samples 4 to 11 after the first step and before the second step were approximately the same as those of samples 1 to 3, which were each a mixture of the raw material powders, before the second step.

In each of the X-ray diffraction patterns of samples 4 to 11 after the second step, which contain a considerable amount of an amorphous substance formed by the disturbance of the Li₂TiF₆ crystal, very broad peaks are observed. In particular, peaks are observed in a range (first range) in which the diffraction angle 2θ of CuKα characteristic X-rays is greater than or equal to 20° and less than or equal to 22°, a range (second range) in which the diffraction angle 2θ is greater than or equal to 40° and less than or equal to 42°, and a range (third range) in which the diffraction angle 2θ is greater than or equal to 26° and less than or equal to 28°. The strongest peak in the first range is hereinafter referred to as the first peak, the strongest peak in the second range as the second peak, and the strongest peak in the third range as the third peak. In FIG. 2, the arrows indicate the first peak, the second peak, and the third peak.

The intensity of the second peak is about 70% to 90% of the intensity of the first peak. The intensity of the third peak is about 10% to 30% of the intensity of the first peak. Accordingly, the first peak has a higher intensity than the second peak, and the second peak has a higher intensity than the third peak.

Since the second peak overlaps with the third peak, their half widths cannot be determined correctly. Therefore, the crystallinity was evaluated by the half width of the first peak. The half widths of the first peaks of samples 4 to 11 were greater than or equal to 1°.

As described above, thanks to the inclusion of a disordered Li₂TiF₆ crystal, i.e., an amorphous substance, the samples of the inventive examples have an excellent ionic conductivity.

The surfaces of the crystalline Li₂TiF₆ powder particles, obtained in the first step, do not have a region having a softness (deformability) provided by disturbing the crystallinity. Therefore, interparticle bonding in a compacted powder structure is low, and separation between particles is likely to occur during heating/cooling cycles. In the second step, Li₂TiF₆ comprising a soft distorted crystal, i.e. amorphous Li₂TiF₆, is formed in the particles. This makes it possible to obtain a highly-reliable compacted powder structure having a high ionic conductivity of, for example, greater than or equal to 1 µS/cm.

The half width of a peak, corresponding to the first peak, of the crystalline Li₂TiF₆ of each of samples 4 to 11 after heat-treatment, i.e., after the first step, was 0.4° to 0.6°. Therefore, it can be said that when the half width of the first peak exceeds 0.6°, then the sample comprises Li₂TiF₆ having amorphousness, i.e., an amorphous substance of Li₂TiF₆.

As shown in Table 2, the solid electrolyte material that achieved the highest conductivity was sample 10, and the half width of the first peak thereof was 2.13°.

The peak shapes having an extremely wide half width suggest that the spacing of reflection planes, contributing to diffraction, has a wide plane spacing distribution (plane spacings vary considerably) corresponding to the peak widths. Accordingly, it is conceivable that samples 4 to 11 contain a component with a disordered atomic arrangement and a low Li binding property, i.e., a distorted crystal or an amorphous substance. A Crystal containing F ions having a high electronegativity generally tends to have a strong Li ion binding effect and a low ionic conductivity. By introducing disorder into the atomic arrangement in the second step, it is possible to make the solid electrolyte material comprise an amorphous component having a lower Li ion binding property, i.e., a distorted crystal or an amorphous substance, resulting in an increase in the conductivity. A region of disturbed crystallinity is formed by external stress; therefore, it is considered that the formation proceeds from the surface of each particle toward the interior by repeated impacts upon ball milling. It is therefore considered that the surface of each particle contains more disordered crystallinity or amorphousness than the interior of the particle.

As described hereinabove, it is preferred to synthesize crystalline Li₂TiF₆ in the first step, and then disturb the crystallinity of Li₂TiF₆ by the mechanochemical treatment. This makes it possible to produce, in good productivity, a highly-reliable solid electrolyte material having a high conductivity

As can be seen in the results for samples 4 to 7, the ionic conductivity was increased by extending the ball milling time. Further, the increase in the half width of the first peak indicates the development of amorphousness by ball milling. The data indicates that the ionic conductivity can be further increased or the mechanochemical treatment time can be shortened by controlling the mechanochemical treatment in the second step.

Sample 11 was melted after heat-treatment because the heat-treatment temperature in the first step was greater than or equal to the melting point of Li₂TiF₆ solid solution. The data thus indicates that a solid electrolyte material having a desired high ionic conductivity can also be obtained by subjecting a solid solution crystal (Li₂TiF₆ solid solution) to the second step.

As indicated by the results for samples 8, 9, and 10, even though the Li₂TiF₆ solid solutions containing Fe, Cr, or ZrO₂ as a sub-component were heat-treated at the temperature (550°C) lower than that of samples 4 to 7 which are other inventive examples, the single phase was obtained, and the ionic conductivities after the second step were as high as greater than 1 µS/cm. It is considered that the inclusion of a sub-component exerts the effect of accelerating a solid-phase reaction and controlling the starting materials.

The solid electrolyte materials of the inventive examples were synthesized in the air, and have excellent air stability.

### Industrial Applicability

The solid electrolyte material according to the present disclosure can be used, for example, in secondary batteries, such as all-solid-state batteries, for use in various electronics or automobiles.

## Claims

1. A solid electrolyte material containing Li, Ti, and F, comprising an amorphous substance containing Li, Ti, and F.

2. The solid electrolyte material according to claim 1, wherein the solid electrolyte material is a solid solution.

3. The solid electrolyte material according to claim 1 or 2, wherein in an X-ray diffraction pattern obtained by powder X-ray diffraction measurement of the solid electrolyte material, at least one peak is present in each of a first range in which the diffraction angle 2θ is greater than or equal to 20° and less than or equal to 22°, a second range in which the diffraction angle 2θ is greater than or equal to 40° and less than or equal to 42°, and a third range in which the diffraction angle 2θ is greater than or equal to 26° and less than or equal to 28°, and wherein the half width of the strongest peak in the first range is greater than or equal to 1°.

4. The solid electrolyte material according to claim 3, wherein the strongest peak in the first range has a higher intensity than the strongest peak in the second range, and the strongest peak in the second range has a higher intensity than the strongest peak in the third range.

5. The solid electrolyte material according to claim 1, wherein the solid electrolyte material is in particulate form.

6. The solid electrolyte material according to claim 5, wherein the crystallinity of the surface of the solid electrolyte material is lower than the crystallinity in the center of the solid electrolyte material.

7. The solid electrolyte material according to claim 1, further containing at least one selected from the group consisting of Ni, Mo, Cr, Fe, and ZrO₂.

8. The solid electrolyte material according to claim 1, further comprising a crystalline phase containing Li, Ti, and F.

9. The solid electrolyte material according to claim 8, wherein the crystalline phase comprises a tetragonal crystal.

10. A method for producing a solid electrolyte material, comprising:
(A) synthesizing a compound comprising a crystalline phase containing Li, Ti, and F; and
(B) performing a treatment to disturb the crystal of the compound.

11. The method for producing a solid electrolyte material according to claim 10,
wherein the compound is synthesized in the step (A) by heat-treatment of a mixture of raw materials.

12. The method for producing a solid electrolyte material according to claim 11,
wherein the mass change rate of the compound before and after the heat-treatment is less than or equal to 1%.

13. The method for producing a solid electrolyte material according to claim 10,
wherein the compound is mechanochemically treated in the step (B).

14. The method for producing a solid electrolyte material according to claim 13, wherein the mechanochemical treatment is ball milling.
